# EUROPEAN PATENT APPLICATION

(11) **EP 3 832 241 A1**
(43) Date of publication of application: **09.06.2021**
(21) Application number: 20210980.7
(22) Date of filing: 01.12.2020
(51) Int. Cl.: F28D 1/053, F28F 19/00, F17C 9/02, F28D 21/00

(54) **AMBIENT AIR VAPORIZER WITH ICEPHOBIC/WATERPHOBIC TREATMENT**

(30) Priority: 02.12.2019 US 201962942446 P
(71) Applicant: Chart Inc., Ball Ground, GA 30107 (US)
(72) Inventor: Kubica, Jan, Ball Ground, GA 30107 (US); Kotek, Milan, Ball Ground, GA 30107 (US); Rosenbaum, Radek, Ball Ground, GA 30107 (US)
(74) Representative: Pinnington, Giles Oliver

(57) **Abstract**

An ambient air vaporizer includes a heat exchanger tube having a surface with an icephobic/waterphobic treatment.

## Description

### CLAIM OF PRIORITY

This application claims the benefit of U.S. Provisional Application No. 62/942,446, filed December 2, 2019, the contents of which are hereby incorporated by reference.

### FIELD OF THE INVENTION

The present disclosure relates generally to heat exchangers for fluid processing and, in particular, to ambient air vaporizers for evaporating and superheating of cryogenic fluids.

### BACKGROUND

Cryogenic fluids, that is, fluids having a boiling point generally below -150°C at atmospheric pressure, are used in a variety of applications, such as mobile and industrial applications. Cryogenic fluids typically are stored and distributed as liquids to reduce storage volume and facilitate distribution.

Cryogenic fluids, such as nitrogen, oxygen, argon, natural gas, hydrogen, etc., are typically utilized in the gaseous phase. The low temperature in the liquid phase enables use of the heat energy of ambient air for cryogenic liquid evaporation and cold gas superheating.

An ambient air vaporizer is a heat exchanger intended for evaporating and superheating of cryogenic fluid. The ambient air vaporizer comprises a bundle of high finned tubes made from extruded aluminum profiles connected in series and in parallel. The cryogen flows inside the tubes, while the outer sides of the tubes are exposed to the warmer ambient air. As a result, the cryogen is heated as it flows through the tubes. An example of a system that uses such heat exchangers is provided in commonly assigned U.S. Patent No. 6,799,429 to Drube et al., the contents of which are hereby incorporated by reference.

Ambient air contains water and moisture. As the air cools down on the heat exchanger profiles, this water condenses and freezes out on the heat exchanger surface. This icing considerably impairs the heat exchanger performance.

A nominal capacity of the ambient air vaporizer usually applies for 6 to 8 hours operation between complete defrosts. As a result, and depending on the expected climatic conditions, in a typical installation, the installed nominal capacity of the ambient air vaporizers used is usually 4 to 5 times larger than the requirements. For example, if a requirement is for 100 Nm³/h, the installed nominal capacity is 400 to 500 Nm³/h.

Besides the costs associated with additional capacity, the ambient vaporizers occupy a considerable space that increases with additional capacity. As a result, any reduction in the required capacity of an installation is welcome as the installation site area can be smaller.

### SUMMARY

There are several aspects of the present subject matter which may be embodied separately or together in the devices and systems described and claimed below. These aspects may be employed alone or in combination with other aspects of the subject matter described herein, and the description of these aspects together is not intended to preclude the use of these aspects separately or the claiming of such aspects separately or in different combinations as set forth in the claims appended hereto.

In one aspect, an ambient air vaporizer includes a heat exchanger tube having a surface with an icephobic/waterphobic treatment. The heat exchanger tube may be a finned heat exchanger tube. The icephobic/waterphobic treatment may be selected from the group consisting of a paint coating, a laser engraving, anodizing, and a mechanical treatment. The heat exchanger tube may include an evaporating section and a superheating section. The heat exchanger tube may be part of an evaporating section. The heat exchanger tube may be part of a superheating section. The ambient air vaporizer may include an evaporating section and a heating section.

The evaporating section may include an icephobic/waterphobic treatment and the superheating section may include an icephobic/waterphobic treatment. The evaporating section may include a first heat exchange tube and the superheating section may include a second heat exchanger tube. The first and second heat exchanger tubes may be finned heat exchanger tubes. The icephobic/waterphobic treatment may be selected from the group consisting of a paint coating, a laser engraving, anodizing, and a mechanical treatment. The heat exchanger tube may include an evaporating section and a superheating section. The evaporating section may include a first plurality of heat exchanger tubes and the superheating section may include a second plurality of heat exchanger tubes. The first plurality of heat exchanger tubes may be arranged in parallel and the second plurality of heat exchanger tubes may be arranged in series. Each of the first and second plurality of heat exchanger tubes may be finned.

In an aspect, an ambient air vaporizer includes an evaporating section and a superheating section, where the evaporating section includes an icephobic/waterphobic treatment and the superheating section includes an icephobic/waterphobic treatment. The evaporating section may include a first heat exchanger tube and the superheating section may include a second heat exchanger tube. The first and second heat exchanger tubes may be finned heat exchanger tubes. The icephobic/waterphobic treatment may be selected from the group consisting of a paint coating, a laser engraving, anodizing, and a mechanical treatment. The heat exchanger tube may include an evaporating section and a superheating section. The evaporating section may include a first plurality of heat exchanger tubes and the superheating section may include a second plurality of heat exchanger tubes. The first plurality of heat exchanger tubes may be arranged in parallel and the second plurality of heat exchanger tubes may be arranged in series. Each of the first and second plurality of heat exchanger tubes may be finned.

In an aspect, a method of treating an ambient air vaporizer includes the step of providing the surface of the ambient air vaporizer with an icephobic/waterphobic treatment. The step of providing the surface of the ambient air vaporizer with an icephobic/waterphobic treatment includes providing an icephobic/waterphobic treatment to a surface of a heat exchanger tube. The step of providing the surface of the ambient air vaporizer with an icephobic/waterphobic treatment includes providing an icephobic/waterphobic treatment to the surface of multiple heat exchanger tubes. The icephobic/waterphobic treatment may be selected from the group consisting of a paint coating, a laser engraving, anodizing, and a mechanical treatment.

### BRIEF DESCRIPTION OF THE DRAWINGS

In describing the preferred example embodiments, references are made to the accompanying drawing figures wherein like parts have like reference numerals, and wherein:
Fig. 1 is a schematic view of an ambient air vaporizer in an embodiment of the disclosure;
Fig. 2 shows plots of temperature along a vaporizer at different times with a first cryogen fluid flow rate in an embodiment of the disclosure;
Fig. 3 shows plots of ice build-up along a vaporizer at different times with the first cryogen flow rate in an embodiment of the disclosure;
Fig. 4 shows plots of temperature along a vaporizer at different times with a second cryogen fluid flow rate in an embodiment of the disclosure;
Fig. 5 shows plots of ice build-up along a vaporizer at different times with the second cryogen flow rate in an embodiment of the disclosure.

### DETAILED DESCRIPTION OF EMBODIMENTS

In accordance with the disclosure, an icephobic/waterphobic treatment is applied to the outer surface of one or more ambient air vaporizers. Such a treatment repels or sheds water and ice on the treated exterior surface(s) of the ambient air vaporizer.

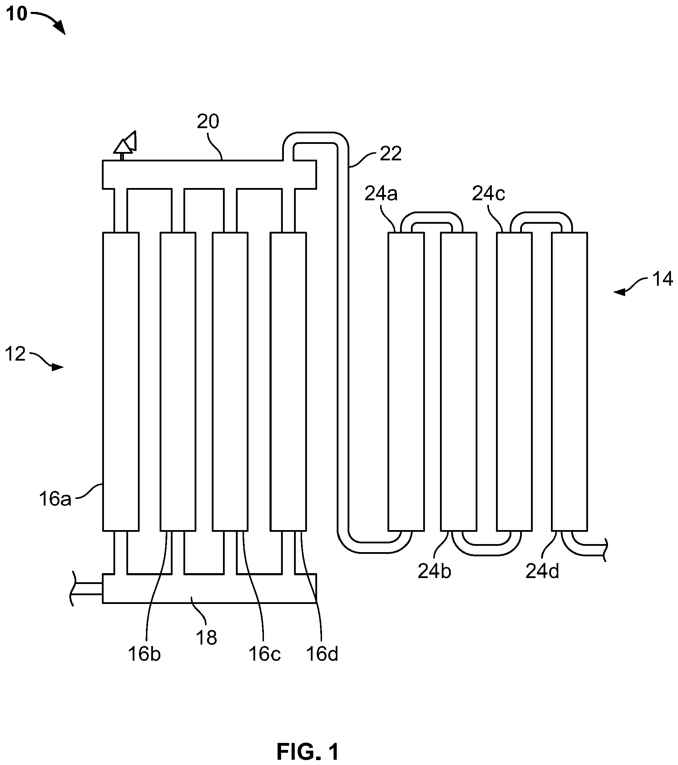

An ambient air vaporizer that has been treated in accordance with an embodiment of the disclosure is indicated in general at 10 in Fig. 1. The ambient air vaporizer includes an evaporating section 12 of parallel heat exchanger tubes and a superheating section 14 of heat exchanger tubes arranged in series. The heat exchanger tubes of sections 12 and 14 each preferably include a finned construction, including, but not limited to, multiple fins (not illustrated in Fig. 1) running parallel to the longitudinal axis of the heat exchanger tube and extending outwardly in a radial fashion, as is known in the art.

Evaporating section 12 features heat exchanger tubes 16a-16d, which receive cryogenic liquid from inlet header 18. The cryogenic liquid is warmed by ambient air acting on the exterior surfaces and fins (if present) of the heat exchanger tubes of section 12 and is vaporized so that vapor exits section 12 via the outlet header 20. The vapor travels to superheating section 14 via line 22 and through the series heat exchanger tubes 24a-24d and is superheated, again using heat supplied by ambient air.

The number and configuration of the heat exchanger tubes presented in Fig. 1 are presented as examples only. As another example only, the ambient air vaporizer may include a single heat exchanger tube with an inlet end portion that serves as the evaporating section and an outlet end portion that serves as the superheating section, or a number of such heat exchanger tubes.

An icephobic/waterphobic treatment is applied to the surfaces and fins (if present) of the heat exchanger tubes of evaporating section 12 and superheating section 14. The icephobic/waterphobic treatment may include, as examples only, a paint coating (super hydrophobic coating, nano layers, sol-gel, etc.), laser engraving, anodizing and/or a mechanical treatment (during extrusion of the heat exchanger profiles or after). The surface treatment(s) may be applied to both the fins and/or any other exterior surface(s) of the heat exchanger tube(s). In addition, the icephobic/waterphobic treatment applied to the evaporating section may be the same as or different from the icephobic/waterphobic treatment applied to the superheating section. In an alternative embodiment, the icephobic/waterphobic treatment may be applied to only one of the sections.

Although the surface treatment becomes ineffective once an ambient air vaporizer is covered with ice, and also in the evaporating section of the vaporizer (which is colder than the superheating section of the vaporizer), due to a low temperature absorption mechanism, the icephobic/waterphobic surface treatment may be advantageous for at least two reasons:

(1) It considerably slows down ice creation in the superheating section of the vaporizer. The fluid in the ambient air vaporizer undergoes a gradual heating from its liquid temperature to a temperature that is only few degrees lower than that of the ambient temperature. A large portion of the vaporizer thus experiences relatively warm temperatures at which the treatment is effective.

(2) It facilitates the ice shedding during the defrosting period. When ice melts in one section of the vaporizer, then this exposed section receives more heat from the surrounding air and the tubes longitudinally conduct this heat to the ice covered sections. The surface treatment makes the ice shedding easier.

As an example only, If the water freezing temperature (or temperature at which ice starts to stick to the vaporizer surface) can be reduced from 0.01°C to minus 10°C, then the vaporizer capacity for 24 hour operation at 20°C/75%RH can be increased by about 12%.

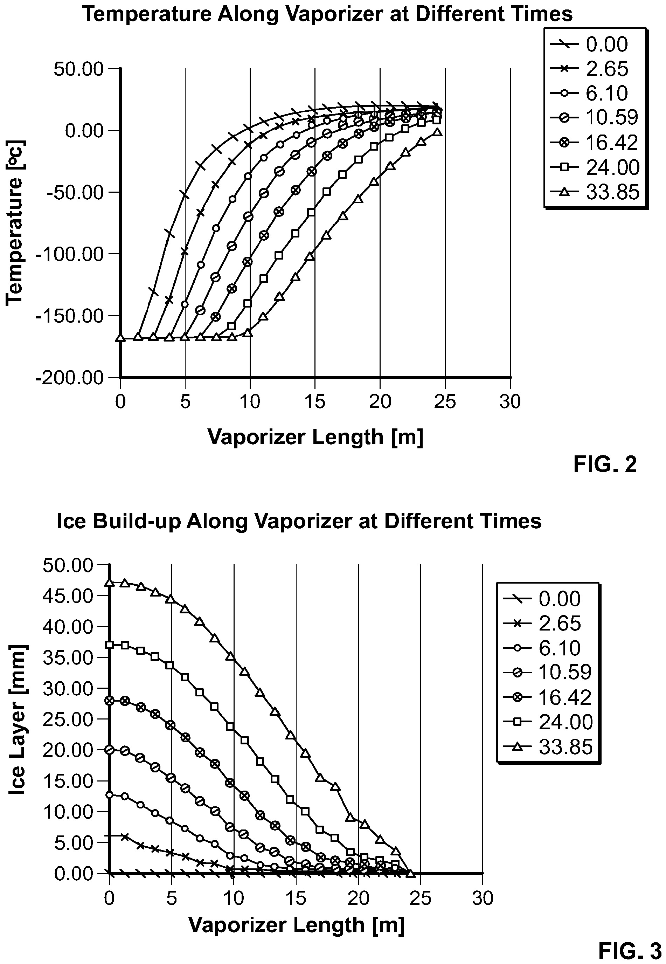

Data is presented in Figs. 2 and 3 for an ice sticking temperature set to minus 10°C and 100 Nm³/h of nitrogen passing through vaporizer with an outer surface of 36 m² (vaporizer type SG50HF). Each plot is for the number of hours listed in the keys of Figs. 2 and 3. Outlet temperature in 24 hours is 7.37°C.

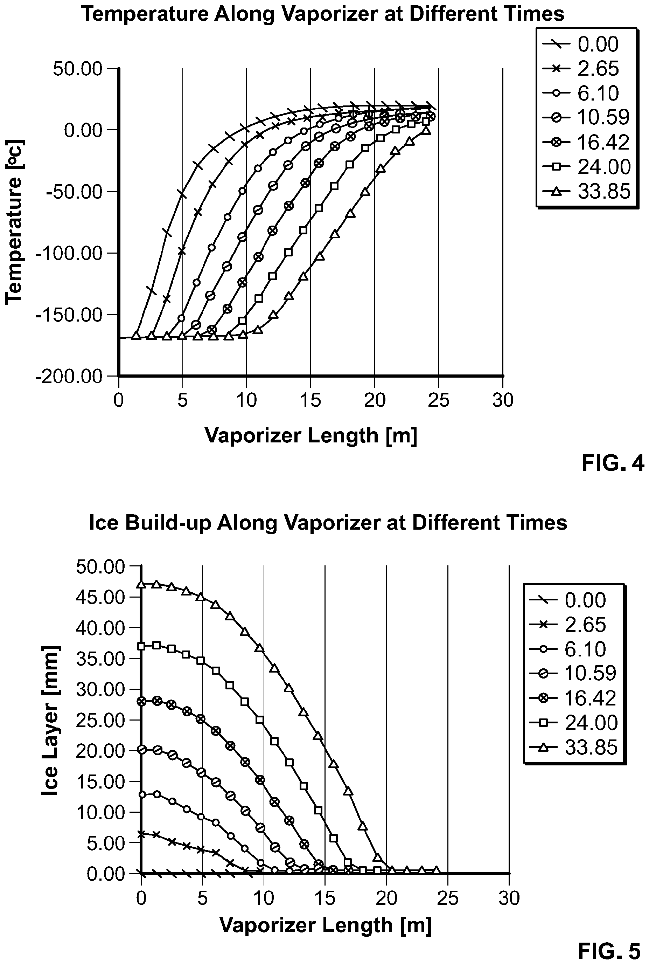

Data is presented in Figs. 4 and 5 for an ice sticking temperature set to minus 10°C and 111.7 Nm³/h of nitrogen passing through vaporizer with an outer surface of 36 m² (vaporizer type SG50HF). Each plot is for the number of hours listed in the keys of Figs. 4 and 5. Outlet temperature in 24 hours is 7.37°C.

While the preferred embodiments of the disclosure have been shown and described, it will be apparent to those skilled in the art that changes and modifications may be made therein without departing from the spirit of the disclosure, the scope of which is defined by the following claims.

## Claims

1. An ambient air vaporizer comprising a heat exchanger tube having a surface with an icephobic/waterphobic treatment.

2. The ambient air vaporizer of claim 1 wherein the heat exchanger tube is a finned heat exchanger tube.

3. The ambient air vaporizer of claim 1 or 2 wherein the icephobic/waterphobic treatment is selected from the group consisting of a paint coating, a laser engraving, anodizing and a mechanical treatment.

4. The ambient air vaporizer of any of claims 1 to 3 wherein the heat exchanger tube includes an evaporating section and a superheating section.

5. The ambient air vaporizer of any of claims 1 to 4 wherein the heat exchanger tube is part of an evaporating section.

6. The ambient air vaporizer of any of claims 1 to 5 wherein the heat exchanger tube is part of a superheating section.

7. An ambient air vaporizer including an evaporating section and a superheating section, where the evaporating section includes an icephobic/waterphobic treatment and the superheating section includes an icephobic/waterphobic treatment.

8. The ambient air vaporizer of claim 7 wherein the evaporating section includes a first heat exchange tube and the superheating section includes a second heat exchanger tube, optionally wherein the first and second heat exchanger tubes are finned heat exchanger tubes.

9. The ambient air vaporizer of claim 7 or 8 wherein the icephobic/waterphobic treatment is selected from the group consisting of a paint coating, a laser engraving, anodizing and a mechanical treatment.

10. The ambient air vaporizer of any of claims 7 to 9 wherein a heat exchanger tube includes an evaporating section and a superheating section.

11. The ambient air vaporizer of any of claims 7 to 10 wherein the evaporating section includes a first plurality of heat exchanger tubes and the superheating section includes a second plurality of heat exchanger tubes, optionally wherein the first plurality of heat exchanger tubes are arranged in parallel and the second plurality of heat exchanger tubes are arranged in series.

12. The ambient air vaporizer of claim 11 wherein the each of the first and second plurality of heat exchanger tubes is finned.

13. A method of treating an ambient air vaporizer comprising the step of providing the surface of the ambient air vaporizer with an icephobic/waterphobic treatment.

14. The method of claim 13 wherein the step of providing the surface of the ambient air vaporizer with an icephobic/waterphobic treatment includes providing an icephobic/waterphobic treatment to a surface of a heat exchanger tube, optionally wherein the step of providing the surface of the ambient air vaporizer with an icephobic/waterphobic treatment includes providing an icephobic/waterphobic treatment to surface of multiple heat exchanger tubes.

15. The method of claims 13 or 14 wherein the icephobic/waterphobic treatment is selected from the group consisting of a paint coating, a laser engraving, anodizing and a mechanical treatment.
